# EUROPÄISCHE PATENTSCHRIFT

(11) **EP 1 260 415 B1**
(45) Veröffentlichungstag und Bekanntmachung des Hinweises auf die Patenterteilung: **27.10.2004**
(21) Anmeldenummer: 02010265.3
(22) Anmeldetag: 17.05.2002
(51) Int. Cl.: B60R 21/20

(54) **Gassackmodul**
Airbag module
Module de sac gonflable

(30) Priorität: 22.05.2001 DE 20108594 U
(43) Veröffentlichungstag der Anmeldung: 27.11.2002
(73) Patentinhaber: TRW Automotive Safety Systems GmbH, 63743 Aschaffenburg (DE)
(72) Erfinder: Heindl, Ralf, 63743 Aschaffenburg (DE)
(74) Vertreter: Kitzhofer, Thomas, Dipl.-Ing.

(56) Entgegenhaltungen:
- WO-A-00/15470
- GB-A- 2 341 359

## Beschreibung

Die Erfindung betrifft ein Gasssackmodul, mit einem Gasgenerator, der im Modul mittels wenigstens eines elastischen Elements schwingungsentkoppelt gelagert ist.

Solche Gassackmodule werden bislang ausschließlich in Lenkrädern vorgesehen und bieten den Vorteil, daß der relativ schwere Gasgenerator schwingungsentkoppelt vom Rest des Moduls gelagert ist und damit die Vibrationsneigung des Lenkrads abnimmt. Der Gasgenerator kann auch als sogenannter Schwingungstilger ausgelegt sein. Das Entkoppeln des Gasgenerators erfolgt mittels des oder der elastischen Elemente, über die der Gasgenerator im Modul gehaltert ist. Das elastische Element muß hohen Anforderungen genügen, zum Beispiel über den Betriebstemperaturbereich von -40° bis +80° möglichst gleichbleibend elastisch und darüber hinaus alterungsbeständig sein. Ferner muß die Befestigung am Gasgenerator sehr sicher sein, wobei zum Beispiel Aufvulkanisieren angedacht wird.

Aus der WO 00/15470 ist ein derartiges Gassackmodul bekannt.

Die Erfindung schafft ein Gassackmodul mit einem einfach aufgebauten, den oben genannten Anforderungen entsprechenden elastischen Element. Beim Gassackmodul nach der Erfindung ist das elastische Element ein im Querschnitt geschlossenes Hohlprofil mit einer Umfangswand, deren radiale Außenseite einerseits am Gasgenerator und andererseits an einem modulseitigen Halteteil anliegt. Ein Hohlprofil hat den Vorteil, daß es sich aufgrund seiner Geometrie Konturen sehr gut anpaßt, denn es kann gegenüber einem O-Ring oder einem Gummipuffer auch nach innen stark nachgeben, wodurch seine Elastizität gesteigert werden kann.

Vorzugsweise umschließt das elastische Element den Gasgenerator vollständig und kann darüber hinaus einen Spalt zwischen einem Halteteil am Modul und dem Gasgenerator abdichten, so daß das elastische Element eine Doppelfunktion innehat (entkoppelte Lagerung am Halteteil und Abdichtung). Durch die Abdichtung soll gewährleistet sein, daß kein Gas im Bereich der Halterung des Gasgenerators aus dem Modul heraustreten kann.

Das elastische Element hat gemäß einer bevorzugten Ausführungsform eine geschlossene Ringform, was die Dichtigkeit erhöht.

Innenseitig kann das elastische Element darüber hinaus ausgeschäumt sein, um die Stabilität desselben zu erhöhen. Eine Stabilitätserhöhung kann aber auch dadurch erfolgen, daß wenigstens ein elastisches Stützelement im elastischen Element untergebracht ist. Dieses Stützelement wird vorzugsweise in das elastische Element eingelegt (zum Beispiel bei seiner Fertigung) oder in Öffnungen im elastischen Element eingeschoben.

Eine Ausführungsform sieht vor, daß das elastische Element im nicht verbauten Zustand einen kreisrunden Querschnitt einnimmt, also ein sehr einfach zu fertigendes Hohlprofil ist.

Eine erste Ausführungsform der Erfindung schlägt vor, daß der Gasgenerator einen radialen Halteflansch hat, an dessen Ober- und dessen Unterseite jeweils ein elastisches Element anliegt. Die Elemente werden durch Halteteile aufeinander zu gedrückt, um zwischen sich den Halteflansch zu klemmen. Ein Vorteil hierbei ist die einfache Montage und die einfach zu fertigende Ausführung der elastischen Elemente.

Eine zweite Ausführung sieht vor, daß nur ein einziges elastisches Element vorgesehen ist, wobei sich dieses von der Oberseite des Halteflansches des Gasgenerators und am Umfangsrand entlang bis zu der Unterseite des Halteflansches erstreckt. Durch Halteteile wird das elastische Element gegen die Ober- und die Unterseite gedrückt, um den Halteflansch zwischen sich zu klemmen. Hauptvorteil dieser Ausführungsform ist, daß nur ein einziges elastisches Element vorgesehen ist, das sich auch radial außerhalb des Umfangsrandes erstreckt.

Bevorzugt ist eines der Halteteile, die zum Klemmen des elastischen Elements führen, ein den Gasgenerator umgebender, topfförmiger Diffusor, also ein ohnehin vorgesehenes Teil, das mit der Klemmung des elastischen Elements oder der elastischen Elemente eine weitere Funktion bekommt.

Beim erfindungsgemäßen Gassackmodul wird das Hohlprofil quer zu seiner Längserstreckung durch den Gasgenerator belastet, das heißt im Querschnitt gesehen quer zu seiner Längserstreckung. Im Stand der Technik gibt es zwar elastische Elemente in Form von kurzen Buchsen, diese Buchsen werden aber in axialer Richtung belastet, so daß ihre Nachgiebigkeit begrenzt ist. Darüber hinaus bilden diese Buchsen nur Punktauflagen und können keine Abdichtung gewährleisten.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine Querschnittsansicht eines erfindungsgemäßen Gasgenerators gemäß einer ersten Ausführungsform,
- Figur 2 eine Querschnittsansicht eines erfindungsgemäßen Gasgenerators gemäß einer zweiten Ausführungsform, und
- Figuren 3a bis c Querschnittsansichten verschiedener elastischer Elemente.

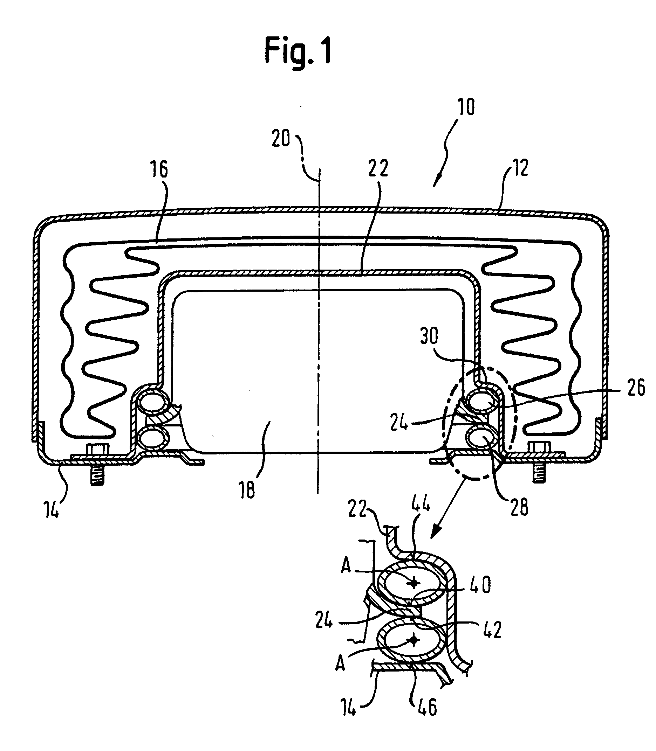

In Figur 1 ist ein im Lenkrad eines Fahrzeugs untergebrachtes Gassackmodul 10 dargestellt, das ein topfförmiges Außengehäuse 12 hat, das rückseitig durch ein Generatorhalteblech 14 oder ein ähnliches Teil geschlossen ist. Im Inneren des Gassackmoduls sind ein Gassack 16 sowie ein zylindrischer Gasgenerator 18 mit einer Mittelachse 20 untergebracht. Zwischen Gassack 16 und Gasgenerator 18 sitzt ein topfförmiger Diffusor 22, der am Generatorhalteblech 14 verschraubt ist. Der Gasgenerator hat einen radialen, umlaufenden Flansch 24, an dessen Oberseite ein elastisches Element 26 in Form eines ringförmig entlang des Flansches 24 verlaufenden, im Umfang geschlossenen Hohlprofils anliegt. Das Hohlprofil ist im Querschnitt kreisringförmig ausgeführt. Ein zweites elastisches Element 28, das die gleiche Geometrie wie das elastische Element 26 aufweist, liegt an der Unterseite des Flansches 24 an. Über die elastischen Elemente 26, 28 wird der Gasgenerator 18 schwingungsentkoppelt im Modul 10 gelagert. Die elastischen Elemente 26, 28 werden in radialer Richtung zusammengedrückt, indem ein Absatz 30 des Diffusors 22 auf das Element 26 drückt und damit die beiden Elemente 26, 28 samt des Flansches 24 zwischen sich und dem Halteblech 14 klemmt. Die Elemente 26, 28 sind folglich so eingebaut, daß ihre ringförmig parallel zum Flansch 24 verlaufende Längsachse A senkrecht zur Achse 20 steht.

Dem vergrößerten Ausschnitt von Figur 1 ist zu entnehmen, daß jedes Element 26, 28 mit der radialen Außenseite seiner Umfangswand an einem ersten umlaufenden Abschnitt 40 bzw. 42 am Flansch 24 und an einem entgegengesetzten Abschnitt 44 bzw. 46 am Diffusor 22 bzw. dem Halteblech 14 anliegt. Das bedeutet, die Elemente 26, 28 sind im eingebauten Zustand quer zu ihrer Längserstreckung belastet und vorgespannt und werden auch im Betrieb quer zur Längserstreckung, das heißt radial belastet. Bei der Ausführungsform nach Figur 1 werden die Elemente 26, 28 durch den Diffusor 22 und das Generatorhalteblech 14 aufeinander zu gedrückt, um zwischen sich den Halteflansch 24 zu klemmen.

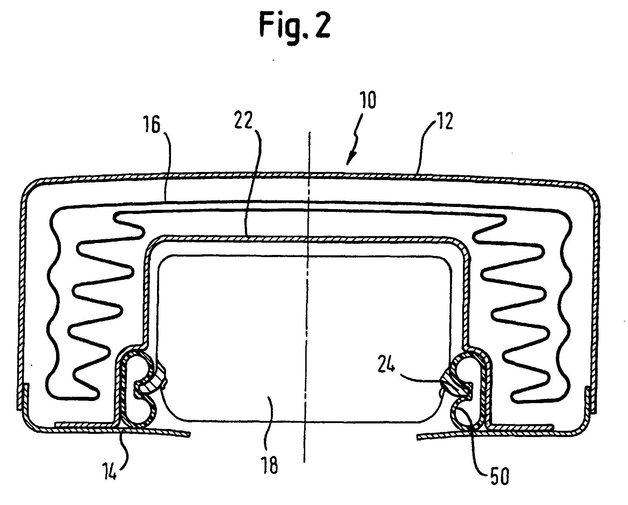

Die Ausführungsform nach Figur 2 unterscheidet sich von der nach Figur 1 lediglich durch die Ausbildung des elastischen Elements, wobei gemäß Figur 2 nur ein einziges elastisches Element 50 vorgesehen ist, welches sich von der Oberseite des Halteflansches 24 und am äußeren Umfangsrand entlang bis zur Unterseite des Halteflansches 24 erstreckt. Im Bereich des Umfangsrandes erhält das elastische Element 50, das ebenfalls ringförmig umlaufend ist und im Querschnitt ein geschlossenes Hohlprofil hat, eine nach radial außen gerichtete Einbuchtung. Auch bei dieser Ausführungsform wird der Gasgenerator 18 durch das elastische Element 50 mittels Klemmen des Halteflansches 24 zwischen Abschnitten des elastischen Elementes 50 schwingungsentkoppelt im Modul gelagert. Hierzu drückt, wie bei Figur 1, der Diffusor 22 das elastische Element 50 nach unten in Richtung zum Generatorhalteblech 14, das ebenso wie der Diffusor 22 ein Halteteil für den Gasgenerator 18 und das bzw. die elastischen Elemente 50 bzw. 26, 28 bildet.

Bei beiden Ausführungsformen hat jedes elastische Element 26, 28, 50 nicht nur die Funktion, den Gasgenerator 18 schwingungsentkoppelt zu lagern, sondern auch noch die Funktion, ein Ausströmen von Gas entlang des Halteflansches 24, durch den Spalt zwischen dem Halteflansch 24 und dem Diffusor 22 sowie dem Halteflansch 24 und dem Halteblech 14 zu verhindern. Dieser Spalt wird nämlich durch die elastischen Elemente 26, 28, 50 gasdicht verschlossen, so daß das Gas nicht rückseitig aus dem Modul 10 herausströmen kann, sondern nur über den Diffusor 22 in das Innere des Gassacks 16 gelangen wird.

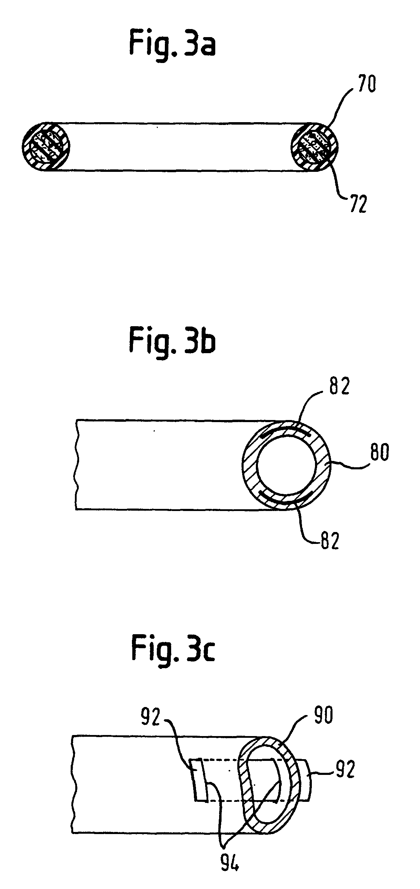

In den Figuren 3a bis 3c sind noch verschiedene Varianten des elastischen Elementes dargestellt, bei denen das elastische Element eine höhere Stabilität durch zusätzliche Mittel erhält.

Bei der Ausführung nach Figur 3a ist das elastische Element 70 im Inneren ausgeschäumt, wobei der Schaum mit dem Bezugszeichen 72 versehen ist. Das elastische Element 80 gemäß Figur 3b hat zwei im Querschnitt schalenförmige, umlaufende elastische Stützelemente 82, die bei der Herstellung des elastischen Elements 80 eingelegt wurden. Bei der Ausführungsform nach Figur 3c hat das elastische Element 90 an seiner Umfangswand Öffnungen in Form von Schlitzen, durch die von radial außen streifenförmige Stützelemente 92 eingeschoben sind. Die Schlitze sind mit 94 bezeichnet.

Bei allen Ausführungsformen sind die elastischen Elemente aus einem Elastomer hergestellt.

## Patentansprüche

1. Gassackmodul, mit einem Gasgenerator ( 18), der im Modul (10) mittels wenigstens eines elastischen Elements (26, 28; 50; 70; 80; 90) gelagert ist,
**dadurch gekennzeichnet, daß**
das elastische Element (26, 28; 50; 70; 80; 90) ein im Querschnitt geschlossenes Hohlprofil mit einer Umfangswand ist, deren radiale Außenseite einerseits am Gasgenerator (18) und andererseits an einem modulseitigen Halteteil (14, 22) anliegt.

2. Gassackmodul nach Anspruch 1, **dadurch gekennzeichnet, daß** das elastische Element (26, 28; 50; 70; 80; 90) den Gasgenerator (18) umschließt.

3. Gassackmodul nach Anspruch 1 oder 2, **dadurch gekennzeichnet, daß** das elastische Element (26, 28; 50; 70; 80; 90) einen Spalt zwischen einem Halteteil (14, 22), an dem der Gasgenerator (18) befestigt ist, und dem Gasgenerator (18) abdichtet.

4. Gassackmodul nach einem der vorhergehenden Ansprüche, **dadurch gekennzeichnet, daß** das elastische Element (26, 28; 50; 70; 80; 90) eine geschlossene Ringform hat.

5. Gassackmodul nach einem der vorhergehenden Ansprüche, **dadurch gekennzeichnet, daß** das elastische Element (70) ausgeschäumt ist.

6. Gassackmodul nach einem der vorhergehenden Ansprüche, **dadurch gekennzeichnet, daß** im elastischen Element (80; 90) wenigstens ein elastisches Stützelement (82; 92) untergebracht ist, das die Stabilität des elastischen Elements (80; 90) erhöht.

7. Gassackmodul nach Anspruch 6, **dadurch gekennzeichnet, daß** das Stützelement (82; 92) in das elastische Element (80; 90) eingelegt oder in Öffnungen (94) eingeschoben ist.

8. Gassackmodul nach einem der vorhergehenden Ansprüche, **dadurch gekennzeichnet, daß** das elastische Element (26, 28; 50; 70; 80; 90) im nicht verbauten Zustand einen kreisrunden Querschnitt einnimmt.

9. Gassackmodul nach einem der vorhergehenden Ansprüche, **dadurch gekennzeichnet, daß** der Gasgenerator (18) einen Halteflansch (24) hat, an dessen Ober- und dessen Unterseite jeweils ein elastisches Element (26, 28) anliegt, und daß die elastischen Elemente (26, 28) durch Halteteile (14, 22) aufeinander zu gedrückt werden, um zwischen sich den Halteflansch (24) zu klemmen.

10. Gassackmodul nach einem der Ansprüche 1 bis 8, **dadurch gekennzeichnet, daß** der Gasgenerator (18) einen Halteflansch (24) hat und sich das elastische Element (50) von dessen Oberseite und am Umfangsrand entlang bis zu dessen Unterseite erstreckt und daß das elastische Element (50) durch Halteteile (14, 22) gegen die Oberseite und die Unterseite gedrückt wird, um den Halteflansch (14) zu klemmen.

11. Gassackmodul nach Anspruch 9 oder 10, **dadurch gekennzeichnet, daß** eines der Halteteile ein den Gasgenerator (18) umgebender, topfförmiger Diffusor (22) ist.

12. Gassackmodul nach einem der vorhergehenden Ansprüche, **dadurch gekennzeichnet, daß** der Gasgenerator (18) eine axiale Mittelachse (20) aufweist und sich das elastische Element (26, 28; 50; 70; 80; 90) mit seiner Längsachse rechtwinklig zur Achse (20) des Gasgenerators und um diesen herum erstreckt.

## Claims

1. An airbag module comprising a gas generator (18) that is mounted in the module (10) by means of at least one elastic element (26, 28; 50; 70; 80; 90),
**characterized in that**
the elastic element (26, 28; 50; 70; 80; 90) is a hollow profile that is closed as seen in cross-section and has a circumferential wall the radial outer side of which lies against the gas generator (18) on the one hand and against a holding part (14, 22) on the module side on the other hand.

2. The airbag module according to Claim 1, **characterized in that** the elastic element (26, 28; 50; 70; 80; 90) surrounds the gas generator (18).

3. The airbag module according to Claim 1 or 2, **characterized in that** the elastic element (26, 28; 50; 70; 80; 90) seals off a gap between a holding part (14, 22), to which the gas generator (18) is attached, and the gas generator (18).

4. The airbag module according to any of the preceding claims, **characterized in that** the elastic element (26, 28; 50; 70; 80; 90) has the shape of a closed ring.

5. The airbag module according to any of the preceding claims, **characterized in that** the elastic element (70) is foam-filled.

6. The airbag module according to any of the preceding claims, **characterized in that** at least one elastic support element (82; 92) is accommodated in the elastic element (80; 90) to increase the stability of the elastic element (80; 90).

7. The airbag module according to Claim 6, **characterized in that** the support element (82; 92) is inserted into the elastic element (80; 90) or slid into openings (94).

8. The airbag module according to any of the preceding claims, **characterized in that** the elastic element (26, 28; 50; 70; 80; 90) assumes a circular cross-section in the non-installed state.

9. The airbag module according to any of the preceding claims, **characterized in that** the gas generator (18) includes a holding flange (24) having a top and a bottom against each of which an elastic element (26, 28) lies, and that the elastic elements (26, 28) are pressed towards each other by holding parts (14, 22), in order to clamp the holding flange (24) between them.

10. The airbag module according to any of Claims 1 to 8, **characterized in that** the gas generator (18) has a holding flange (24) and the elastic element (50) extends from the top of the holding flange and along the circumferential edge as far as to the bottom of the holding flange, and that the elastic element (50) is pressed against the top and the bottom by holding parts (14, 22) in order to clamp the holding flange (14).

11. The airbag module according to Claim 9 or 10, **characterized in that** one of the holding parts is a pot-shaped diffuser (22) that surrounds the gas generator (18).

12. The airbag module according to any of the preceding claims, **characterized in that** the gas generator (18) has an axial middle axis (20) and the longitudinal axis of the elastic element (26, 28; 50; 70; 80; 90) extends at a right angle to the axis (20) of the gas generator and around the latter.

## Revendications

1. Module de coussin à gaz, comportant un générateur de gaz (18) qui est logé dans le module (10) au moyen d'au moins un élément élastique (26, 28 ; 50 ; 70 ; 80 ; 90),
**caractérisé en ce que**
l'élément élastique (26, 28 ; 50 ; 70 ; 80 ; 90) est un profil creux de section transversale fermée, avec une paroi périphérique dont la face extérieure radiale est en appui d'une part sur le générateur de gaz (18) et d'autre part sur une partie de retenue (14, 22) côté module.

2. Module de générateur de gaz selon la revendication 1, **caractérisé en ce que** l'élément élastique (26, 28 ; 50 ; 70 ; 80 ; 90) entoure le générateur de gaz (18).

3. Module de coussin à gaz selon la revendication 1 ou 2, **caractérisé en ce que** l'élément élastique (26, 28 ; 50 ; 70 ; 80 ; 90) étanche une fente entre une partie de retenue (14, 22), sur laquelle le générateur de gaz (18) est fixé, et le générateur de gaz (18).

4. Module de coussin à gaz selon l'une des revendications précédentes, **caractérisé en ce que** l'élément élastique (26, 28 ; 50 ; 70 ; 80 ; 90) a une forme annulaire fermée.

5. Module de coussin à gaz selon l'une des revendications précédentes, **caractérisé en ce que** l'élément élastique (70) est moulé par expansion.

6. Module de coussin à gaz selon l'une des revendications précédentes, **caractérisé en ce que** dans l'élément élastique (80 ; 90) est logé au moins un élément de soutien (82 ; 92) élastique qui augmente la stabilité de l'élément élastique.

7. Module de coussin à gaz selon la revendication 6, **caractérisé en ce que** l'élément de soutien (82 ; 92) est inséré dans l'élément élastique (80 ; 90) ou enfilé dans des ouvertures (94).

8. Module de coussin à gaz selon l'une des revendications précédentes, **caractérisé en ce que** l'élément élastique (26, 28 ; 50 ; 70 ; 80 ; 90) prend une section transversale ronde à l'état non monté.

9. Module de coussin à gaz selon l'une des revendications précédentes, **caractérisé en ce que** le générateur de gaz (18) a une bride de retenue (24) sur les faces supérieure et inférieure de laquelle un élément élastique (26, 28) respectif est en appui, et **en ce que** les éléments élastiques (26, 28) sont pressés l'un vers l'autre par des parties de retenue (14, 22) pour serrer entre eux la bride de retenue (24).

10. Module de coussin à gaz selon l'une des revendications 1 à 8, **caractérisé en ce que** le générateur de gaz (18) a une bride de retenue (24), et l'élément élastique (50) s'étend depuis la face supérieure de celle-ci et le long du bord périphérique jusqu'à la face inférieure de celle-ci, et **en ce que** l'élément élastique (50) est pressé par des parties de retenue (14, 22) contre la face supérieure et contre la face inférieure pour serrer la bride de retenue (14).

11. Module de coussin à gaz selon la revendication 9 ou 10, **caractérisé en ce qu'**une des parties de retenue est un diffuseur (22) en forme de pot entourant le générateur de gaz (18).

12. Module de coussin à gaz selon l'une des revendications précédentes, **caractérisé en ce que** le générateur de gaz (18) présente un axe médian (20) axial, et l'élément élastique (26, 28 ; 50 ; 70 ; 80 ; 90) s'étend avec son axe longitudinal perpendiculairement à l'axe (20) du générateur de gaz et autour de celui-ci.
